# EUROPEAN PATENT APPLICATION

(11) **EP 4 718 112 A1**
(43) Date of publication of application: **01.04.2026**
(21) Application number: 25161453.3
(22) Date of filing: 04.03.2025
(51) Int. Cl.: G01S 7/481, G01S 7/484, G01S 17/894

(54) **LIGHT EMITTING DEVICE AND DISTANCE MEASURING DEVICE**

(30) Priority: 26.09.2024 JP 2024167685
(71) Applicant: Fujifilm Business Innovation Corp., Tokyo 107-0052 (JP)
(72) Inventor: SAKITA, Tomoaki, Ebina (JP); SUGIBUCHI, Hiroki, Ebina (JP); IGUCHI, Daisuke, Ebina (JP); TAKEYAMA, Kei, Ebina (JP)
(74) Representative: Meissner Bolte Partnerschaft mbB

(57) **Abstract**

A light emitting device includes plural light sources each having plural light emitting sections configured to emit light individually, in which the plural light sources is driven to light only first light emitting sections that radiate the light toward one region, and the plural light sources includes a partial light source having a radiation angle larger than a radiation angle of another light source.

## Description

### Background

### (i) Technical Field

The present disclosure relates to a light emitting device and a distance measuring device.

### (ii) Related Art

For example, Japanese Unexamined Patent Application Publication No. 2021-153135 discloses a measurement device including a light emitter including a first light emitting section that emits light toward a first region, and a second light emitting section that emits light toward a second region different from the first region. The measurement device further includes a light receiver including a first light receiving section that receives light reflected by the first region, and a second light receiving section that receives light reflected by the second region. The measurement device further includes an acquirer that acquires information on the second region based on a result of the light emitted from the first light emitting section, reflected by the second region, and received by the second light receiving section.

### Summary

There is a light emitting device including a plurality of light sources each having a plurality of light emitting sections. It is assumed that the light emitting section that radiates light toward one region is lit in each of the plurality of light sources. If the plurality of light sources has the same radiation angle, the effect of displacement of the light emitting sections on the one region may increase due to the accuracy of assembling of the plurality of light sources, etc.

Accordingly, it is an object of the present disclosure to reduce an effect of displacement of light emitting sections on one region compared with a case where a plurality of light sources has the same radiation angle.

According to a first aspect of the present disclosure, there is provided a light emitting device comprising a plurality of light sources each having a plurality of light emitting sections configured to emit light individually, wherein the plurality of light sources is driven to light only first light emitting sections that radiate the light toward one region, and the plurality of light sources includes a partial light source having a radiation angle larger than a radiation angle of another light source.

According to a second aspect of the present disclosure, in the light emitting device according to the first aspect, the first light emitting section of the partial light source is configured to radiate the light also toward a region adjacent to the one region, and a radiation range of the first light emitting section of the partial light source is wider than a radiation range of the first light emitting section of the other light source.

According to a third aspect of the present disclosure, in the light emitting device according to the second aspect, the first light emitting section of the partial light source is configured to radiate the light toward the one region and the entire adjacent region.

According to a fourth aspect of the present disclosure, in the light emitting device according to any one of the first to third aspects, a number of the partial light sources is smaller than ta number of the other light sources.

According to a fifth aspect of the present disclosure, in the light emitting device according to the fourth aspect, the number of the partial light sources is one.

According to a sixth aspect of the present disclosure, in the light emitting device according to any one of the first to fifth aspects, the partial light source includes an optical member with which the radiation angle is larger than the radiation angle of the other light source.

According to a seventh aspect of the present disclosure, in the light emitting device according to the sixth aspect, a number of the optical members is smaller than a number of the light emitting sections.

According to an eighth aspect of the present disclosure, there is provided a distance measuring device comprising: the light emitting device according to the first aspect; a light receiver configured to receive reflected light originating from the light emitting device; an acquirer configured to acquire a light reception result from the light receiver; and a distance measurer configured to measure a distance based on the light reception result acquired by the acquirer.

According to the first aspect of the present disclosure, an effect of displacement of the light emitting sections on the one region may be reduced compared with a case where the plurality of light sources has the same radiation angle.

According to the second aspect of the present disclosure, the effect of displacement of the light emitting sections on the one region may be reduced compared with a case without the configuration in which the first light emitting section of the partial light source is configured to radiate the light also toward the region adjacent to the one region and the radiation range of the first light emitting section of the partial light source is wider than the radiation range of the first light emitting section of the other light source.

According to the third aspect of the present disclosure, the effect of displacement of the light emitting sections on the one region may be reduced compared with a case without the configuration in which the first light emitting section of the partial light source is configured to radiate the light toward the one region and the entire adjacent region.

According to the fourth aspect of the present disclosure, an effect of a high-reflectance object may be reduced compared with a case without the configuration in which the number of the partial light sources is smaller than the number of the other light sources.

According to the fifth aspect of the present disclosure, the effect of the high-reflectance object may be reduced compared with a case without the configuration in which the number of the partial light sources is one.

According to the sixth aspect of the present disclosure, costs may be reduced compared with a case without the configuration in which the partial light source includes the optical member with which the radiation angle is larger than the radiation angle of the other light source.

According to the seventh aspect of the present disclosure, costs may be reduced compared with a case without the configuration in which the number of the optical members is smaller than the number of the light emitting sections.

According to the eighth aspect of the present disclosure, the effect of displacement of the light emitting sections on the one region may be reduced compared with a case where the plurality of light sources has the same radiation angle.

### Brief Description of the Drawings

An exemplary embodiment of the present disclosure will be described in detail based on the following figures, wherein:
Fig. 1 is a block diagram illustrating an example of the overall configuration of a distance measuring device according to an exemplary embodiment;
Fig. 2 illustrates a relationship between a light emitting surface of a light emitter and an irradiation plane irradiated with light emitted from the light emitter according to the exemplary embodiment;
Fig. 3 illustrates an example of the light emitter according to the exemplary embodiment;
Fig. 4 illustrates a relationship between a light receiving surface of a light receiver and the irradiation plane according to the exemplary embodiment;
Fig. 5 illustrates an example of the sequence of irradiation of irradiation sections of the irradiation plane;
Figs. 6A to 6C illustrate a distance image according to the exemplary embodiment, in which Fig. 6A illustrates positional relationships between the distance measuring device and target objects, Fig. 6B illustrates the state of the irradiation plane, and Fig. 6C illustrates an example of the distance image created by a controller;
Fig. 7 is a perspective view illustrating an example of the overall configuration of the distance measuring device according to the exemplary embodiment;
Fig. 8 illustrates the configuration of light sources of the light emitter;
Figs. 9A to 9D illustrate configuration examples of the light sources including optical members, in which Figs. 9A and 9B illustrate an example in which microlenses are used as the optical members, and Figs. 9C and 9D illustrate another example in which lenses are used as the optical members;
Fig. 10 illustrates a light amount distribution in a light receiving section of the light receiver that receives light from the plurality of light sources;
Figs. 11A to 11C are graphs illustrating an example, in which Figs. 11A and 11B illustrate the example to which the exemplary embodiment is applied, and Fig. 11C illustrates related art to which the exemplary embodiment is not applied to show a difference from the example;
Figs. 12A and 12B are graphs illustrating a comparative example in which the radiation angles of the light sources are θ2; and
Fig. 13 illustrates a modification.

### Detailed Description

An exemplary embodiment of the present disclosure is described in detail with reference to the accompanying drawings.

The technical scope disclosed herein is not limited to the scope described in the exemplary embodiment. It is understood, from the description of the claims, that the technical scope encompasses combinations of a plurality of examples and various modifications or revisions of the examples.

### <Distance Measuring Device 1>

### (Overall Configuration)

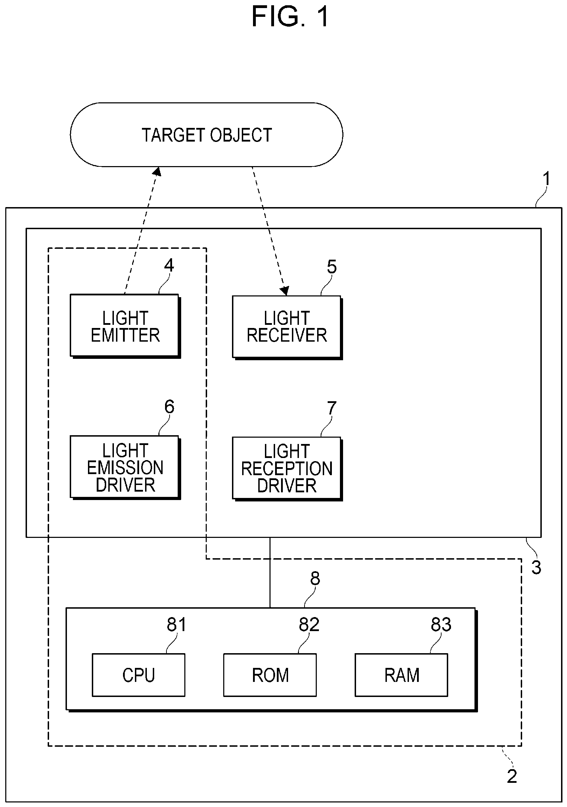

Fig. 1 is a block diagram illustrating an example of the overall configuration of a distance measuring device 1 according to this exemplary embodiment.

The distance measuring device 1 measures a distance to a target object based on a period from a timing when a light emitter 4 emits light to a timing when a light receiver 5 receives light reflected by the target object. That is, the distance measuring device 1 performs distance measurement by ToF. Examples of ToF include indirect ToF (iToF) in which the period is measured based on a difference between the phase of emitted light and the phase of received light, and direct ToF (dToF) in which the period from light emission to light reception is measured directly. In this exemplary embodiment, the distance measuring device 1 performs distance measurement by indirect ToF.

As illustrated in Fig. 1, the distance measuring device 1 includes an optical device 3 and a controller 8.

The optical device 3 includes the light emitter 4 that emits light toward a predetermined irradiation range, the light receiver 5 that receives the light emitted from the light emitter 4 and reflected by a target object in the irradiation range, a light emission driver 6 that drives the light emitter 4, and a light reception driver 7 that drives the light receiver 5.

The configurations of the light emitter 4 and the light receiver 5 of the optical device 3 are described in detail later. The reference symbol 2 indicating the broken line is described later.

The controller 8 controls operations of the light emitter 4 and the light receiver 5 of the optical device 3.

The controller 8 acquires a light reception result from the light receiver 5, and measures a distance from the distance measuring device 1 to the target object by ToF based on the light reception result.

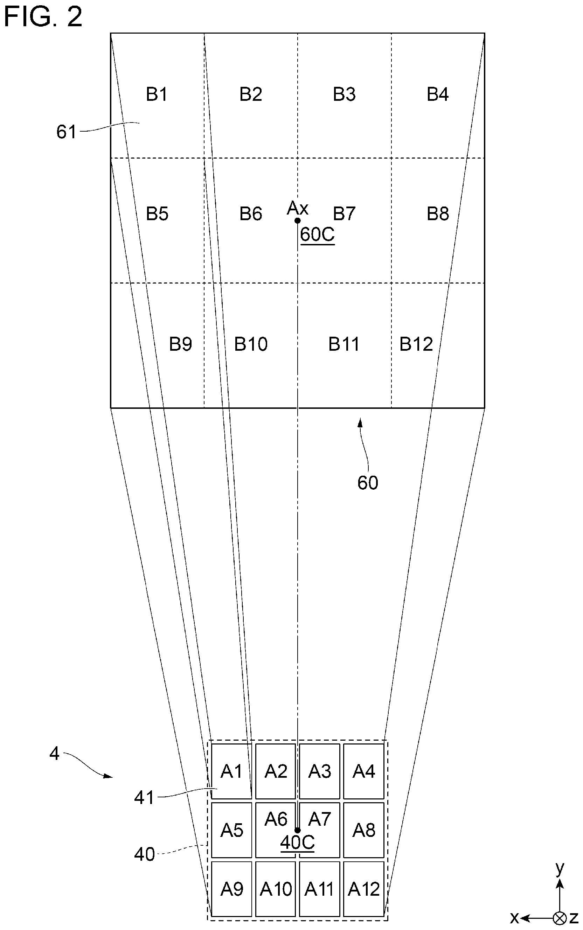

The light receiver 5 detects infrared rays radiated from the target object in the irradiation range (irradiation plane 60 described later in Fig. 2). The controller 8 generates an infrared image based on a detection result. The controller 8 generates the infrared image by detecting the infrared rays from the irradiation range continuously or intermittently at predetermined time intervals.

The controller 8 grasps the status of the target object in the irradiation range by analyzing the acquired infrared image. The controller 8 grasps, as the status of the target object in the irradiation range, whether the target object in the irradiation range is a movable object or a stationary object. The controller 8 grasps, as the status of the target object in the irradiation range, an irradiation section 61 (see Fig. 2) of the irradiation range where the target object is present. When the target object is a movable object, the controller 8 grasps, as the status of the target object in the irradiation range, a movement direction and a relative movement amount of the target object in the irradiation range.

### (Light Emitter 4)

Fig. 2 illustrates a relationship between a light emitting surface 40 of the light emitter 4 and the irradiation plane 60 irradiated with light emitted from the light emitter 4 according to this exemplary embodiment. In Fig. 2, a leftward direction on the drawing sheet is a +x direction, an upward direction on the drawing sheet is a +y direction, a far-side direction on the drawing sheet is a +z direction, and their opposite directions are -x, -y, and -z directions. In Fig. 2, the light emitting surface 40 and the irradiation plane 60 are shifted in the vertical direction (±y direction) on the drawing sheet. In actuality, the light emitting surface 40 and the irradiation plane 60 face each other. In Fig. 2, the light emitting surface 40 of the light emitter 4 is located on the near side (-z direction) on the drawing sheet, and the irradiation plane 60 is located on the far side (+z direction) on the drawing sheet. That is, in Fig. 2, the light emitter 4 that is emitting light to the irradiation plane 60 is viewed from the back side of the light emitter 4 opposite to the light emission side.

The light emitter 4 includes, for example, one or more light emitting chips.

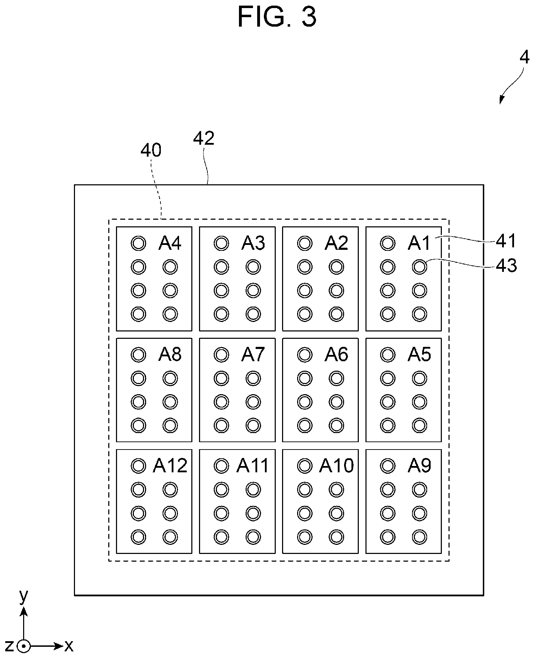

The light emitter 4 has the light emitting surface 40 where a plurality of vertical cavity surface emitting lasers (VCSELs 43 in Fig. 3) is arranged. The light emitter 4 emits light toward the irradiation plane 60 by light emission from the VCSELs 43. In Fig. 2, illustration of the VCSELs 43 is omitted.

As described later, the light emitter 4 may have a plurality of light emitting surfaces 40.

The light emitting surface 40 is divided into a plurality of light emitting sections 41 each including at least one VCSEL 43. The light emitting surface 40 is divided into, for example, a total of 12 light emitting sections 41 in which four light emitting sections 41 are arranged in the x direction and three light emitting sections 41 are arranged in the y direction. As in the illustration, the light emitting sections 41 may be distinguished as light emitting sections A1 to A12 in the order from the upper left side in Fig. 2 (corner in the +x direction and the +y direction).

The word "to" in the numbering herein means a plurality of components distinguished by numbers, including the components with numbers across the word "to" and the components with numbers therebetween. For example, the light emitting sections A1 to A12 include 12 light emitting sections 41 with numbers A1 to A12 in sequence.

The light emitting sections 41 are independently driven by the light emission driver 6 (see Fig. 1) to emit light. Each light emitting section 41 emits light with electric power supplied to the VCSELs 43 in the light emitting section 41 by the light emission driver 6. In this exemplary embodiment, the VCSELs 43 in each light emitting section 41 emit light with electric power supplied to the VCSELs 43. The amount of light emitted from each light emitting section 41 is adjustable depending on the environment such as brightness of the irradiation range, a user's operation on the distance measuring device 1, etc.

In this exemplary embodiment, the drive of the light emitting section 41 refers to light emission of the VCSELs 43 in the light emitting section 41 by power supply, and the light emitting operation refers to light emission of the VCSELs 43 in the light emitting section 41 during a predetermined light emission period.

The term "independent drive" refers to drive of the individual light emitting sections 41 to emit light. The light emission driver 6 drives each light emitting section 41 in response to a control signal from the controller 8 (see Fig. 1). All the light emitting sections 41 need not emit light simultaneously. In the example of Fig. 2, there is a possibility that the light emitting section A1 emits light and the light emitting section A12 does not emit light.

The irradiation plane 60 is a plane that is orthogonal to a direction in which light is emitted (+z direction) from a center 40C of the light emitting surface 40 at a certain distance in the light emission direction, and that is irradiated with light from the light emitter 4.

In the example of Fig. 2, the light emitter 4 emits light in the +z direction. Therefore, the irradiation plane 60 extends in the x direction and the y direction at a certain distance in the +z direction. A central axis Ax (two-dot chain line) passing through a center 60C of the irradiation plane 60 and the center 40C of the light emitting surface 40 is perpendicular to the light emitting surface 40 and the irradiation plane 60. In this exemplary embodiment, the irradiation plane 60 has a rectangular shape in conjunction with the rectangular shape of the light emitting surface 40.

As in the illustration, the irradiation plane 60 is divided into a plurality of irradiation sections 61 in conjunction with the light emitting sections 41 of the light emitting surface 40. In the example of Fig. 2, the irradiation plane 60 is divided into 12 irradiation sections 61 in which four irradiation sections 61 are arranged in the x direction and three irradiation sections 61 are arranged in the y direction. The irradiation sections 61 may be distinguished as irradiation sections B1 to B 12 in the order from the upper left side in Fig. 2 (corner in the +x direction and the +y direction).

A light emitting section Ai with the same number "i" as a certain irradiation section Bi may be referred to as "corresponding light emitting section." For example, the light emitting section A1 is a light emitting section corresponding to the irradiation section B1. An irradiation section Bi with the same number "i" as a certain light emitting section Ai may be referred to as "corresponding irradiation section."

The irradiation sections B1 to B12 are arranged with plane symmetry to the light emitting sections A1 to A12 in terms of an xy plane. For example, in Fig. 2, the light emitting sections A1, A2, A3, and A4 are arranged in this order in the -x direction, and the irradiation sections B1, B2, B3, and B4 are arranged in this order in the -x direction.

Each light emitting section 41 emits light toward the corresponding irradiation section 61. Each irradiation section 61 is irradiated with the light emitted from the corresponding light emitting section 41. The description "the light emitting section 41 emits light toward the corresponding irradiation section 61" means that the optical axis of the light emitted from each light emitting section 41 is oriented to the corresponding irradiation section 61. This does not necessarily mean that all the light emitted from the light emitting section 41 is radiated to the corresponding irradiation section 61. In other words, part of the light emitted from a certain light emitting section 41 may be radiated to an irradiation section 61 different from the corresponding irradiation section 61 or to the outside of the range of the irradiation plane 60.

Fig. 3 illustrates an example of the light emitter 4 according to this exemplary embodiment. In Fig. 3, the light emitter 4 is viewed from the light emission side contrary to Fig. 2. Therefore, a rightward direction on the drawing sheet of Fig. 3 is the +x direction, an upward direction on the drawing sheet is the +y direction, and a near-side direction on the drawing sheet is the +z direction.

As illustrated in Fig. 3, the light emitter 4 includes a substrate 42 and the light emitting surface 40 including a plurality of VCSELs 43. More specifically, the substrate 42 and the light emitting surface 40 overlap each other in the light emission direction (+z direction, near-side direction on the drawing sheet). Although wiring for power supply or electric signal exchange, electronic components related to operation of the light emitter 4, etc. may be formed on or attached to the substrate 42, illustration is omitted.

As described above, the light emitter 4 includes the 12 light emitting sections 41 (light emitting sections A1 to A12) including the VCSELs 43 arranged on the light emitting surface 40. As illustrated in Fig. 3, all the light emitting sections A1 to A12 have the same area. The light emitting sections A1 to A12 have the same number of VCSELs 43 (seven in this example).

The area of each light emitting section 41 and the number of VCSELs 43 are not limited. Part or all of the light emitting sections 41 may have different areas or different numbers of VCSELs 43.

The light emitted from each light emitting section 41 of the light emitter 4 is radiated to the irradiation plane 60 while being expanded over a plane perpendicular to the light emission direction (direction of the central axis Ax) by a radiation lens (not illustrated). The radiation lens may be an optical member such as a diffuser that is provided on an optical path and diffuses light by scattering etc., a diffractive optical element (DOE) that changes the angle of incident light and emits the light, and/or a lens.

### (Light Receiver 5)

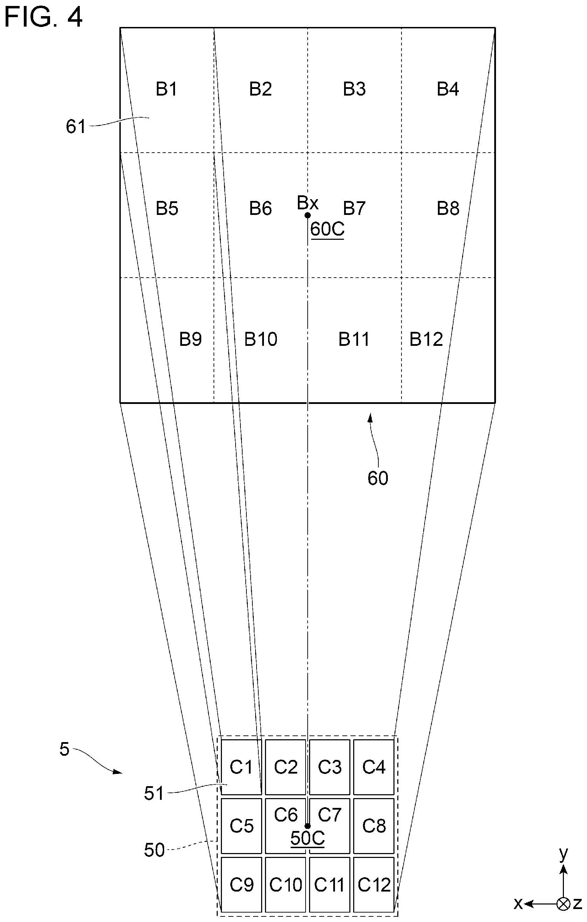

Fig. 4 illustrates a relationship between a light receiving surface 50 of the light receiver 5 and the irradiation plane 60 according to this exemplary embodiment. In Fig. 4, a leftward direction on the drawing sheet is the +x direction, an upward direction on the drawing sheet is the +y direction, a far-side direction on the drawing sheet is the +z direction, and their opposite directions are the -x, -y, and -z directions as in Fig. 2. In Fig. 4, the light receiving surface 50 and the irradiation plane 60 are shifted in the vertical direction (±y direction) on the drawing sheet. In actuality, the light receiving surface 50 and the irradiation plane 60 face each other. In Fig. 4, the light receiver 5 (light receiving surface 50) is located on the near side (-z direction) on the drawing sheet, and the irradiation plane 60 is located on the far side (+z direction) on the drawing sheet. That is, in Fig. 4, the light receiver 5 that receives light reflected from the irradiation plane 60 is viewed from the back side of the light receiver 5 opposite to the light reception side.

The light receiver 5 has the light receiving surface 50 extending in the x direction and the y direction and including a plurality of light receiving elements (not illustrated). The light receiver 5 receives, with the light receiving elements, light emitted from the light emitter 4 and reflected by a target object in the irradiation plane 60.

A central axis Bx (two-dot chain line) passing through the center 60C of the irradiation plane 60 and a center 50C of the light receiving surface 50 is perpendicular to the irradiation plane 60 and the light receiving surface 50. In this exemplary embodiment, the light receiving surface 50 has a rectangular shape similarly to the light emitting surface 40 (see Fig. 2) and the irradiation plane 60.

The light receiving surface 50 is divided into a plurality of light receiving sections 51 in conjunction with the light emitting sections 41 (see Fig. 2) of the light emitting surface 40 (see Fig. 2) and the irradiation sections 61 of the irradiation plane 60. In the example of Fig. 4, the light receiving surface 50 is divided into 12 light receiving sections 51 in which four light receiving sections 51 are arranged in the x direction and three light receiving sections 51 are arranged in the y direction. The light receiving sections 51 may be distinguished as light receiving sections C1 to C12 in the order from the upper left side in Fig. 4 (corner in the +x direction and the +y direction).

A light receiving section Ci with the same number "i" as a certain light emitting section Ai or a certain irradiation section Bi may be referred to as "corresponding light receiving section." For example, the light receiving section C1 is a light receiving section corresponding to the light emitting section A1 or the irradiation section B1. A light emitting section Ai with the same number as a certain light receiving section Ci may be referred to as "corresponding light emitting section" and an irradiation section Bi with the same number as a certain light receiving section Ci may be referred to as "corresponding irradiation section."

The light receiving sections C1 to C12 are arranged with plane symmetry to the irradiation sections B1 to B12 in terms of the xy plane. For example, in Fig. 4, the irradiation sections B1, B2, B3, and B4 are arranged in this order in the -x direction, and the light receiving sections C1, *C2,* C3, and C4 are arranged in this order in the -x direction.

Each light receiving section 51 receives light emitted from the light emitter 4 and reflected by a target object in the corresponding irradiation section 61.

Each light receiving section 51 includes a plurality of light receiving elements arranged in a regular pattern. Each light receiving element may receive light emitted from the light emitter 4 and reflected by a target object in the irradiation plane 60, and output an electric signal based on the received light. Examples of the light receiving element include a photodiode and a phototransistor.

The light receiving sections 51 are independently driven by the light reception driver 7 (see Fig. 1) to receive light. The drive of the light receiving section 51 refers to a state in which the light receiving section 51 may accumulate electric charge in response to light reception of the light receiving element, and the light receiving operation refers to accumulation of electric charge in response to light reception of the light receiving element of the light receiving section 51. The term "independent drive" refers to drive of the individual light receiving sections 51 to accumulate electric charge in response to light reception. The light reception driver 7 drives each light receiving section 51 in response to a control signal from the controller 8 (see Fig. 1).

In response to a reading operation of the controller 8 (detailed later), the light receiver 5 outputs, to the controller 8, electric charge accumulated in the light receiving sections 51, that is, an electric signal corresponding to a light reception result in the light receiving section 51.

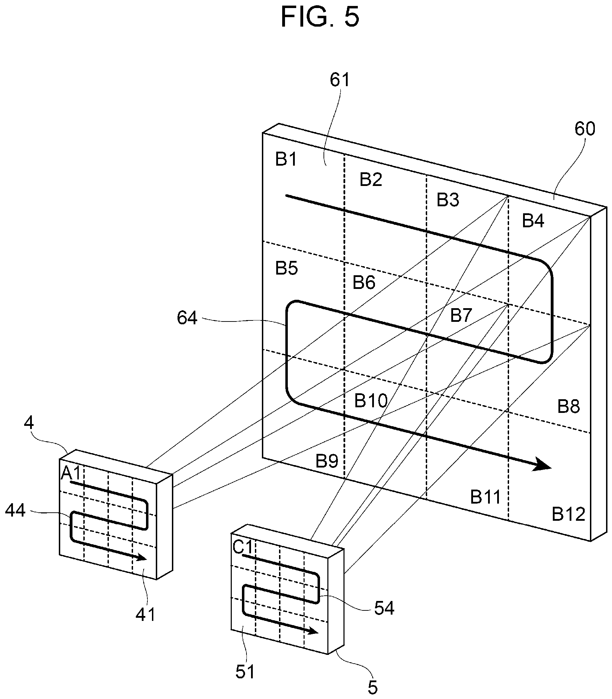

Fig. 5 illustrates an example of the sequence of irradiation of the irradiation sections 61 of the irradiation plane 60.

In the example of the sequence illustrated in Fig. 5, the irradiation sections 61 are sequentially irradiated in a direction of an arrow 64. That is, when the irradiation sections 61 are divided into upper, middle, and lower stages, the upper-stage irradiation sections B1 to B4, the middle-stage irradiation sections B5 to B8, and the lower-stage irradiation sections B9 to B12 are irradiated in this sequence. In the upper stage, the irradiation sections B1 to B4 are irradiated in this sequence. In the middle stage, the direction is opposite to that in the upper stage, and the irradiation sections B8 to B5 are irradiated in this sequence. In the lower stage, the direction is the same as that in the upper stage, and the irradiation sections B9 to B 12 are irradiated in this sequence.

The light emitting sections 41 of the light emitter 4 are driven to emit light in the sequence of an arrow 44 so that the irradiation sections 61 are irradiated in the sequence of the arrow 64. The light receiving sections 51 of the light receiver 5 are driven to receive light reflected from the irradiation sections 61 in the sequence of an arrow 54 corresponding to the arrow 64.

### (Controller 8)

Referring back to Fig. 1, the controller 8 includes a central processing unit (CPU) 81, a read only memory (ROM) 82, and a random access memory (RAM) 83.

The CPU 81 is an example of a processor, and implements functions described later by loading various programs stored in the ROM 82 etc. on the RAM 83 and executing the programs. The RAM 83 is used as a working memory for the CPU 81, etc. The ROM 82 stores various programs to be executed by the CPU 81, etc.

The programs to be executed by the CPU 81 may be provided by being stored in a computer readable recording medium such as a magnetic recording medium (magnetic tape, magnetic disk, etc.), an optical recording medium (optical disc etc.), a magneto-optical recording medium, or a semiconductor memory. The programs to be executed by the CPU 81 may be provided by communication means such as the Internet.

In this exemplary embodiment, processes are performed by any computer. The any computer may perform the processes by a hardware processor, a software program, or a combination thereof. In this case, the processor may cooperate with the program to perform various processes in this exemplary embodiment or function as units or means in this exemplary embodiment. The order of the processes of the processor is not limited to the described order, and may be changed as appropriate. The any computer may be a general-purpose computer, a specific-purpose computer, a workstation, or any other system that may perform the processes.

The processor may be one or more pieces of hardware, and the type of the hardware is not limited. For example, the processor may be hardware such as a central processing unit (CPU), a micro processing unit (MPU), a programmable logic device such as a field programmable gate array (FPGA), a dedicated circuit such as an application specific integrated circuit (ASIC) that performs specific processes, a graphic processing unit (GPU), or a neural processing unit (NPU). The hardware may be a combination of different types of hardware. If a plurality of pieces of hardware is configured to perform one or more processes of a certain processor, the plurality of pieces of hardware may be inside devices located physically apart from each other or may be inside the same device. In any exemplary embodiment, the order of the processes of the processor is not limited to the above order, and may be changed as appropriate. The hardware is electric circuitry including circuit elements such as semiconductor elements in combination.

The program may be firmware or software such as microcode. The program may be, for example, a group of program modules, and their functions may be implemented by a processor configured to perform the functions. The program may be a program code or a plurality of code segments stored in one or more non-transitory computer readable media (e.g., storage media or other storages). The program may be stored separately in a plurality of non-transitory computer readable media inside devices located physically apart from each other. The program code or the code segments may represent any combination of procedures, functions, subprograms, routines, subroutines, modules, software packages, classes, commands, data structures, or program statements. The program code or the code segments may be connected to other code segments or hardware circuits by transmitting and receiving information, data, arguments, parameters, or memory contents.

The controller 8 controls the light emitting operation of the light emitter 4 through the light emission driver 6 and the light receiving operation of the light receiver 5 through the light reception driver 7.

The controller 8 performs the reading operation on the light receiver 5 through the light reception driver 7. The "reading operation" is an operation of the controller 8 for controlling the light receiver 5 through the light reception driver 7 to output an electric signal corresponding to a light reception result of the light receiving elements of each light receiving section 51, thereby acquiring the light reception result in each light receiving section 51. The controller 8 according to this exemplary embodiment may independently perform the reading operation on the light receiving sections 51. For example, when a certain light receiving section Ci and another light receiving section Cj receive light to accumulate electric charge, the controller 8 may perform the reading operation on the light receiving section Ci alone as well as both the light receiving section Ci and the light receiving section Cj.

The controller 8 performs distance measurement on the irradiation sections 61 based on light reception results in the light receiving sections 51. The controller 8 collects distance measurement results in the irradiation sections 61, and creates a distance image showing a distance between the distance measuring device 1 and a target object. More specifically, the controller 8 performs a predetermined arithmetic process on four electric signals acquired from the light receiver 5 as results of light reception performed four times in each light receiving section 51. In this way, the controller 8 calculates (measures) the distance between the distance measuring device 1 and the target object in each irradiation section 61 of the irradiation plane 60, and creates the distance image.

### <Distance Image 100>

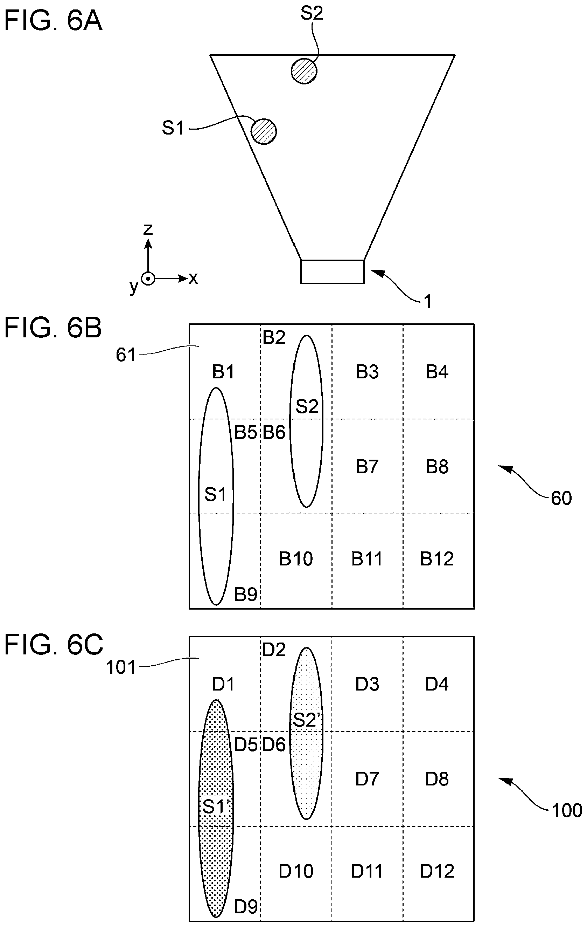

Figs. 6A to 6C illustrate a distance image 100 according to this exemplary embodiment. Fig. 6A illustrates positional relationships between the distance measuring device 1 and target objects S1 and S2. Fig. 6B illustrates the state of the irradiation plane 60. Fig. 6C illustrates an example of the distance image 100 created by the controller 8.

The distance image 100 illustrated in Fig. 6C is created as a result of distance measurement on all the irradiation sections 61 of the irradiation plane 60. In the example of Figs. 6A to 6C, it is assumed that the target objects S1 and S2 (may be referred to as "target objects S" without distinction) are stationary and the positions relative to the distance measuring device 1 do not change at least during a period from start to end of distance measurement for creating the distance image 100 in the distance measuring device 1.

As illustrated in Fig. 6C, the distance image 100 includes a plurality of image sections 101 corresponding to the light emitting sections 41 of the light emitting surface 40, the irradiation sections 61 of the irradiation plane 60, and the light receiving sections 51 of the light receiving surface 50 (see Figs. 2 and 4). In the example of Fig. 6C, the distance image 100 includes 12 image sections 101 in which four image sections 101 are arranged in a lateral direction in Fig. 6C corresponding to the ±x direction for the irradiation plane 60 and the light receiving surface 50 and three image sections 101 are arranged in a vertical direction in Fig. 6C corresponding to the ±y direction. The image sections 101 may be distinguished as image sections D1 to D12 in the order from the upper left side in Fig. 6C.

An image section Di of the distance image 100 is an image obtained based on light emitted from a light emitting section Ai of the light emitting surface 40, reflected by the target object in an irradiation section Bi of the irradiation plane 60, and received by a light receiving section Ci of the light receiving surface 50. The image section Di with the same number "i" as the light emitting section Ai, the irradiation section Bi, and the light receiving section Ci may be referred to as "corresponding image section." The light emitting section Ai with the same number "i" as the image section Di may be referred to as "corresponding light emitting section." The irradiation section Bi with the same number "i" as the image section Di may be referred to as "corresponding irradiation section." The light receiving section Ci with the same number as the image section Di may be referred to as "corresponding light receiving section."

Each image section 101 of the distance image 100 has a plurality of pixels (not illustrated) associated with the plurality of light receiving elements of the corresponding light receiving section 51. In the distance image 100, the pixel value of each pixel of the image section 101 corresponds to the distance from the distance measuring device 1 to the target object that is calculated based on the electric signal from each light receiving element of the light receiving section 51.

In the example illustrated in Fig. 6A, the target objects S1 and S2 are located at certain distances apart from the distance measuring device 1. As illustrated in Fig. 6B, the target object S1 of this example is present in a range including the irradiation sections B1, B5, and B9 of the irradiation plane 60, and the target object S2 is present in a range including the irradiation sections B2 and B6. The distance from the distance measuring device 1 to the target object S1 (e.g., 1 m) is smaller than the distance from the distance measuring device 1 to the target object S2 (e.g., 3 m).

As illustrated in Fig. 6C, an image S1' showing the target object S1 and an image S2' showing the target object S2 (may be referred to as "images S'" without distinction) are rendered in the distance image 100 by the pixels in each image section 101. More specifically, the image S1' is rendered over the image sections D1, D5, and D9 of the distance image 100 corresponding to the irradiation sections B1, B5, and B9, and the image S2' is rendered over the image sections D2 and D6 of the distance image 100 corresponding to the irradiation sections B2 and B6.

In this example, information on the distance from the distance measuring device 1 to the target object S1 and the distance from the distance measuring device 1 to the target object S2 may be obtained based on the pixel values of the pixels constituting the image S1' and the image S2' in the distance image 100 (shaded in Fig. 6C).

The distance image 100 includes information on the distance between each point on the surface of the target object S and the distance measuring device 1, and may therefore be regarded as including information on the three-dimensional shape of the target object S. Thus, the distance measuring device 1 according to this exemplary embodiment is also applicable to three-dimensional measurement.

### <Example of Overall Configuration of Distance Measuring Device 1>

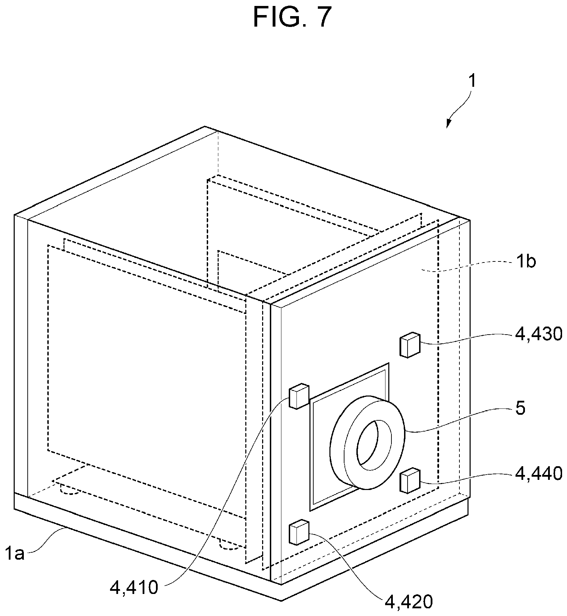

Fig. 7 is a perspective view illustrating an example of the overall configuration of the distance measuring device 1 according to this exemplary embodiment.

The distance measuring device 1 illustrated in Fig. 7 includes at least a housing 1a and a printed board 1b housed in the housing 1a. In Fig. 7, illustration of part of the housing 1a is omitted.

The light emitter 4 and the light receiver 5 constituting the optical device 3 are mounted on the printed board 1b. The CPU 81, the ROM 82, and the RAM 83 (see Fig. 1) constituting the controller 8 are also mounted on the printed board 1b.

In the configuration example illustrated in Fig. 7, the light emitter 4 includes four light sources 410, 420, 430, and 440. Each of the light sources 410 to 440 has the light emitting surface 40 (e.g., Fig. 3) divided into the plurality of light emitting sections 41. The light sources 410 to 440 are disposed around the light receiver 5.

Although the four light sources 410 to 440 are provided in the example of Fig. 7, the number of light sources may be different from four as long as a plurality of light sources is provided. For example, two, three, or five light sources may be provided.

When the light emitter 4 includes the plurality of light sources 410 to 440, it is assumed that, for example, the irradiation section B1 out of the irradiation sections B1 to B12 of the irradiation plane 60 (e.g., Fig. 2) is irradiated with light from the light emitting sections A1 of the plurality of light sources 410 to 440. When light is radiated from the light emitting sections A1 of the plurality of light sources 410 to 440, the irradiation section B1 (see Fig. 2) may be irradiated at a higher energy density than in a case where light is radiated from the light emitting section A1 of any one of the light sources, for example, the light source 410. When the irradiation section B1 is irradiated with light from the light emitting sections A1 of the plurality of light sources 410 to 440, the light exposure period of the light receiving elements (not illustrated) of the light receiving section C1 of the light receiver 5 (see Fig. 4) is reduced and capture of a global component that is background light may be suppressed. Therefore, outdoor long-distance measurement may be performed.

Due to assembling variations etc., it is difficult to match the irradiation area of, for example, the irradiation section 61 (e.g., Fig. 2) of the irradiation plane 60 irradiated with the plurality of light sources 410 to 440 and the light receiving area of the light receiving section 51 corresponding to the irradiation section 61. Therefore, the distance measurement deviation may increase when the irradiation section 61 has a non-irradiation area and accordingly the light receiving section 51 has a non-exposure area.

This exemplary embodiment provides a configuration for eliminating the non-irradiation area when the predetermined irradiation section 61 (e.g., Fig. 2) is irradiated by the plurality of light sources 410 to 440 to reduce the distance measurement deviation due to the non-irradiation area. This configuration is described below.

### <Light Sources 410 to 440>

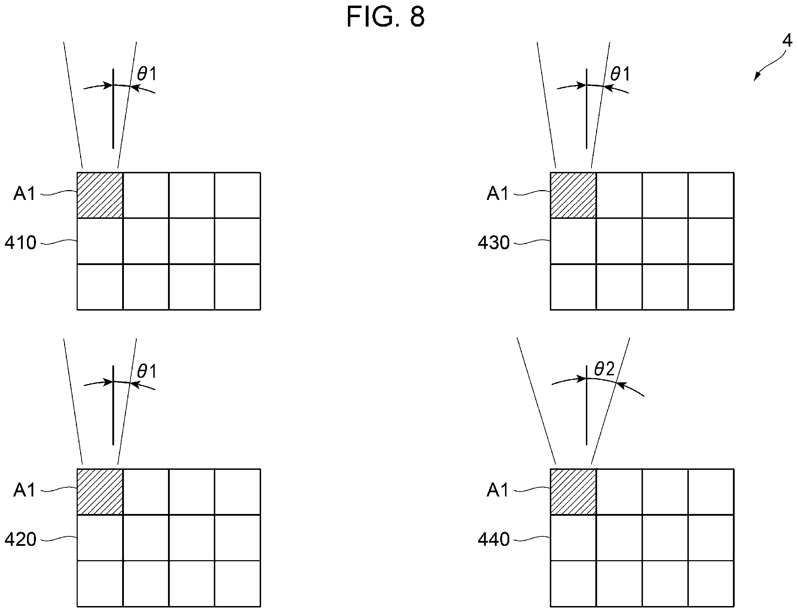

Fig. 8 illustrates the configuration of the light sources 410 to 440 of the light emitter 4. Only the light emitting sections A1 of the light sources 410 to 440 are driven to light up.

Focusing on the light source 410 and the light source 440 illustrated in Fig. 8, the radiation angle of the light source 410 is θ1, and the radiation angle of the light source 440 is 02. The radiation angle θ1 is different from the radiation angle θ2.

More specifically, the radiation angle of light emitted from the light emitting section A1 of the light source 410 is θ1, and the radiation angle of light emitted from the light emitting section A1 of the light source 440 is 02. The radiation angle θ2 is larger than the radiation angle θ1 (θ2 > θ1). At the radiation angle 02, light is diffused more greatly than at the radiation angle θ1.

Each of the radiation angles θ1 and θ2 is an angle indicating the degree of spread of light from the light emitting section A1, and is an angle under the assumption that the light intersects the vertical plane of the light emitting section A1.

The light emitting sections A2 to A12 (see Fig. 2) other than the light emitting section A1 in the light source 410 also have the radiation angle θ1. The light emitting sections A2 to A12 (see Fig. 2) other than the light emitting section A1 in the light source 440 also have the radiation angle θ2.

In this exemplary embodiment, the radiation angle of light emitted from each of the light emitting sections A1 to A12 (see Fig. 2) of the other light sources 420 and 430 is θ1 as in the case of the light source 410. Therefore, the light sources 410 to 430 out of the light sources 410 to 440 in this exemplary embodiment have the radiation angle θ1, and the light source 440 out of the light sources 410 to 440 has the radiation angle θ2. When the light source 410 emits light, the other light sources 420 to 440 also emit light.

When the light emitter 4 includes the four light sources 410 to 440, only the light source 440 has the radiation angle 02, but the light sources are not limited thereto. For example, two light sources 430 and 440 may have the radiation angle θ2. It is appropriate that a single light source rather than two light sources have the radiation angle θ2. That is, it is appropriate that the number of light sources having the radiation angle θ2 be smaller than the number of light sources having the radiation angle θ1. This is because an effect of flare caused by a high-reflectance object that may be present in the irradiation plane 60 increases when the number of light sources having the radiation angle θ2 increases.

Although illustration is omitted, if the light emitter 4 includes, for example, six light sources instead of the four light sources, a single light source, two light sources, or three light sources may have the radiation angle θ2. Also in this case, it is appropriate that the number of light sources having the radiation angle θ2 be smaller than the number of light sources having the radiation angle θ1 for the reason described above.

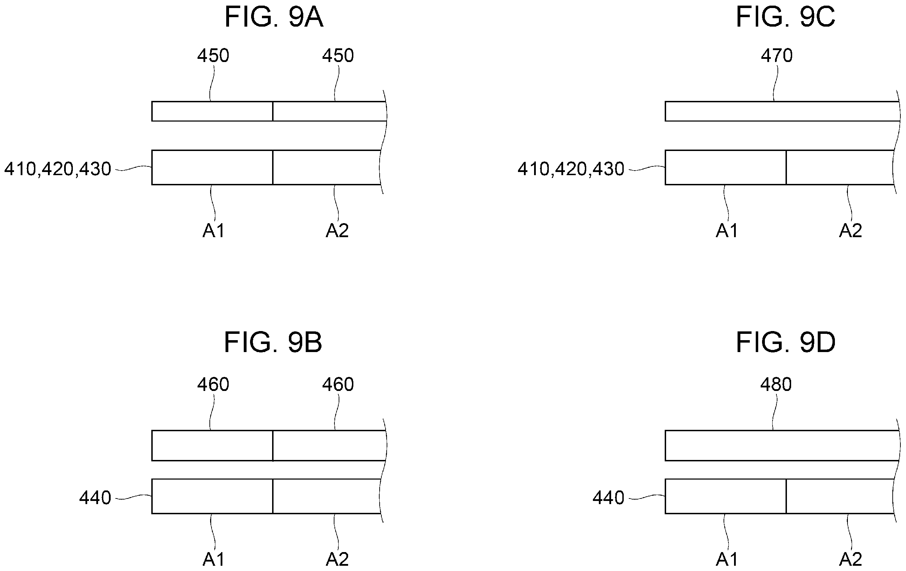

Figs. 9A to 9D illustrate configuration examples of the light sources 410 to 440 including optical members. Figs. 9A and 9B illustrate an example in which microlenses 450 and 460 are used as the optical members. Figs. 9C and 9D illustrate another example in which lenses 470 and 480 are used as the optical members. Although Figs. 9A to 9D illustrate configuration examples of the light emitting sections A1 and A2 of the light sources 410 to 440, the same applies to the other light emitting sections A3 to A12 and illustration thereof is omitted. The light sources 410 to 440 emit light upward in Figs. 9A to 9D.

In the configuration example illustrated in Figs. 9A and 9B, the microlenses are provided individually to the light emitting sections A1 and A2 of each of the light sources 410 to 440. As illustrated in Fig. 9A, the microlenses 450 are provided individually to the light emitting sections A1 and A2 of each of the light sources 410 to 430. As illustrated in Fig. 9B, the microlenses 460 are provided individually to the light emitting sections A1 and A2 of the light source 440. Thus, the number of light emitting sections and the number of microlenses 450 are the same in each of the light sources 410 to 430. The number of light emitting sections and the number of microlenses 460 are the same in the light source 440.

The microlens 450 of each of the light sources 410 to 430 has an optical characteristic to achieve the radiation angle θ1 (see Fig. 8). The microlens 460 of the light source 440 has an optical characteristic to achieve the radiation angle θ2 (see Fig. 8).

If the light sources 410 to 440 have predetermined radiation angles per se, the radiation angles θ1 and θ2 are achieved in combination with the radiation angles of the microlenses 450 and 460.

The predetermined radiation angles of the light sources 410 to 440 are further described.

The radiation angles are set to predetermined angles by, for example, changing the apertures of the light emitting elements of the light sources 410 to 440.

The predetermined radiation angles may be the same among all the light sources 410 to 440 or may be the same among the partial light sources. In the latter case, the predetermined radiation angle of the other light source is different from the predetermined radiation angle of the partial light source. For example, the predetermined radiation angles of the light sources 410 to 430 are the same. That is, the predetermined radiation angle of the light source 440 is different from the predetermined radiation angles of the light sources 410 to 430.

In the other configuration example illustrated in Figs. 9C and 9D, a single lens is provided over the light emitting sections A1 and A2 of each of the light sources 410 to 440. As illustrated in Fig. 9C, the same lens 470 is provided over the light emitting sections A1 and A2 of each of the light sources 410 to 430. As illustrated in Fig. 9D, the same lens 480 is provided over the light emitting sections A1 and A2 of the light source 440.

In each of the light sources 410 to 430, the single lens 470 is provided to the plurality of light emitting sections A1 and A2. In the light source 440, the single lens 480 is provided to the plurality of light emitting sections A1 and A2. Thus, the number of lenses 470 is smaller than the number of light emitting sections A1 to A12 (see Fig. 2) in each of the light sources 410 to 430. The number of lenses 480 is smaller than the number of light emitting sections A1 to A12 (see Fig. 2) in the light source 440.

In another configuration example, the single lens 470 or 480 may be provided to the light emitting sections A1 to A12.

The lens 470 of each of the light sources 410 to 430 has an optical characteristic to achieve the radiation angle θ1 (see Fig. 8). The lens 480 of the light source 440 has an optical characteristic to achieve the radiation angle θ2 (see Fig. 8).

If the light sources 410 to 440 have predetermined radiation angles per se, the radiation angles θ1 and θ2 are achieved in combination with the radiation angles of the lenses 470 and 480. The predetermined radiation angles of the light sources 410 to 440 are similar to those in the case of Figs. 9A and 9B, and description thereof is omitted.

As described above, the light source 440 includes the microlens 460 or the lens 480 with which the radiation angle becomes larger than the radiation angles of the light sources 410 to 430. The microlenses 450 and 460 and the lenses 470 and 480 are an example of the optical member.

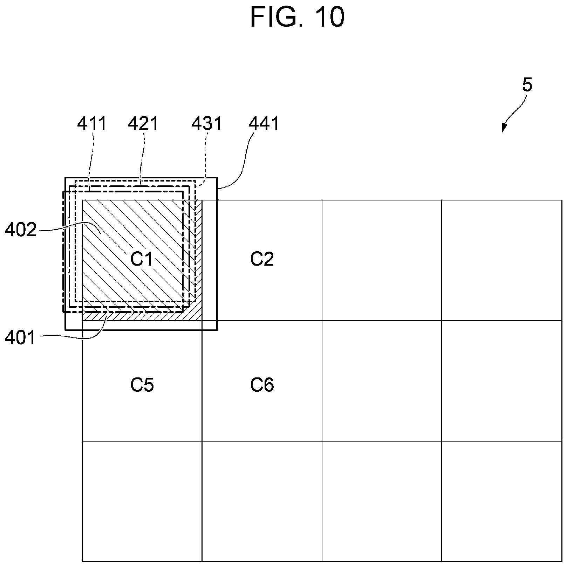

Fig. 10 illustrates a light amount distribution in the light receiving section C1 of the light receiver 5 that receives light from the plurality of light sources 410 to 440.

Although Fig. 10 illustrates the light receiving section C1 etc., they may be regarded as the irradiation section B1 (see Fig. 4) etc. In this case, the irradiation section B1 is an example of one region, and the irradiation sections B2, B5, and B6 corresponding to the light receiving sections C2, C5, and C6 are an example of a region adjacent to the one region. Regions 411 to 431 described later are an example of a radiation range of a first light emitting section of another light source. A region 441 is an example of a radiation range of a first light emitting section of a partial light source.

In the example illustrated in Fig. 10, the light from the light sources 410 to 430 (e.g., Fig. 8) is received while being displaced to the upper left side relative to the light receiving section C1 due to the assembling variations etc. The light from the light source 410 is in the region 411 indicated by a two-dot chain line. The light from the light source 420 is in the region 421 indicated by a chain line. The light from the light source 430 is in the region 431 indicated by a broken line.

The light receiving section C1 has a region 401 (hatched with upward diagonal lines) that is not exposed to any light beams from the light sources 410 to 430. Thus, multipath noise is not generated from a region located far away from the region from which the light receiving section C1 is to receive light.

The light from the light source 440 out of the plurality of light sources 410 to 440 is in the region 441 indicated by a solid line. The light receiving sections C2, C5, and C6 located around the light receiving section C1 as well as the light receiving section C1 are exposed to the light from the light source 440. That is, the light from the light source 440 is received by the entire light receiving section C1. Therefore, the region 401 is exposed to the light from the light source 440.

The region 441 is wider than the regions 411, 421, and 431.

The light receiving section C1 is divided into the upwardly hatched region 401 exposed only to the light from the light source 440, and a downwardly hatched region 402 exposed to the light from at least one of the light sources 410 to 430. More specifically, the region 402 is exposed to the light from at least one of the light sources 410 to 430, and also to the light from the light source 440.

The light receiving section C1 does not have a region that is not exposed to any light beams from the light sources 410 to 440 due to the assembling variations etc.

Although Fig. 10 illustrates the case of the light receiving section C1 of the light receiver 5, the same applies to the other light receiving sections C2 to C12 (see Fig. 4) and description thereof is omitted.

### (Example and Comparative Example)

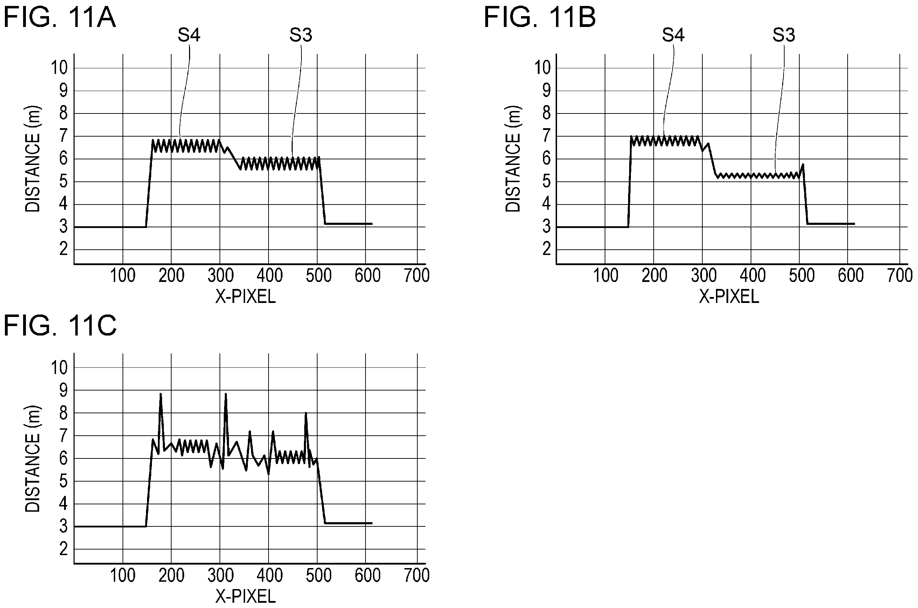

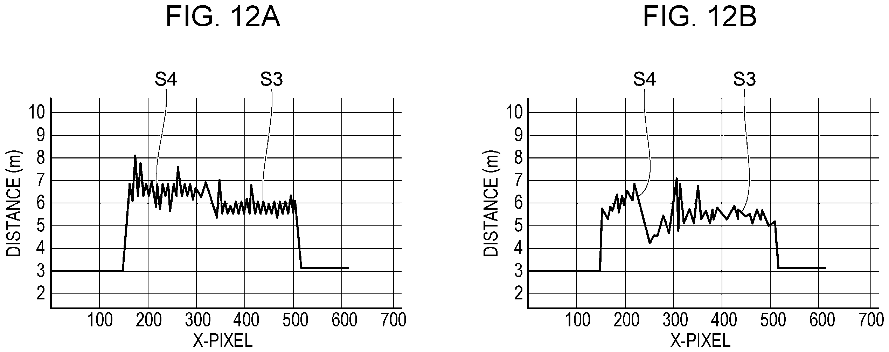

Distance measurement results obtained from the distance image 100 (see Fig. 6C) are described with reference to Figs. 11A to 12B. Figs. 11A to 11C illustrate an example in which the light sources 410 to 430 have the radiation angle θ1 and the light source 440 has the radiation angle θ2 (see Fig. 8) (single diffusion). Figs. 12A and 12B illustrate a comparative example in which the light sources 410 to 440 have the radiation angle θ2 (quadruple diffusion).

Figs. 11A to 11C are graphs illustrating the example. Figs. 11A and 11B illustrate the example to which this exemplary embodiment is applied. Fig. 11C illustrates related art to which this exemplary embodiment is not applied to show a difference from the example.

More specifically, Fig. 11A illustrates a case where the radiation angle θ2 of the light source 440 is larger by 2° than the radiation angle θ1 of the light sources 410 to 430 (θ2 = θ1 + 2°). Fig. 11B illustrates a case where the radiation angle θ2 of the light source 440 is larger by 5° than the radiation angle θ1 of the light sources 410 to 430 (θ2 = θ1 + 5°). Fig. *11C* illustrates a case where the radiation angles of all the light sources 410 to 440 are θ1.

Figs. 11A to *11C* illustrate averages for several frames. The vertical axis represents a distance (m), and the horizontal axis represents an X-pixel indicating a position.

As an example, distance measurement is performed on target objects S3 and S4.

In the example illustrated in Fig. 11A, the distance from the target object S3 is derived to be 5.9 m and the distance from the target object S4 is derived to be 6.5 m from the vertical axis of the graph. In Fig. 11B, the distance from the target object S3 is derived to be 5.3 m and the distance from the target object S4 is derived to be 6.8 m. The accuracy of the distances from the target objects S3 and S4 is higher in Fig. 11B than in Fig. 11A. The fluctuation degrees of the sections corresponding to the target objects S3 and S4 are lower in Fig. 11B than in Fig. 11A.

The target object S4 is located between 150 and 300 and the target object S3 is located between 330 and 500 from the horizontal axis of the graph.

Thus, the distance measurement result is more satisfactory when the radiation angle θ2 is larger by 5° than the radiation angle θ1. This indicates that the radiation of lower-intensity light at the larger radiation angle θ2 is satisfactory.

In the related art illustrated in Fig. 11C, it is difficult to locate the target objects S3 and S4.

Figs. 12A and 12B are graphs illustrating the comparative example in which the radiation angles of all the light sources 410 to 440 are 02 (quadruple diffusion). Fig. 12A illustrates a case where the radiation angle θ2 is larger by 2° than the radiation angle θ1 (see Fig. 8) (θ2 = θ1 + 2°). Fig. 12B illustrates a case where the radiation angle θ2 is larger by 5° than the radiation angle θ1 (see Fig. 8) (θ2 = θ1 + 5°).

Figs. 12A and 12B illustrate averages for several frames. The vertical axis represents a distance (m), and the horizontal axis represents an X-pixel indicating a position.

As the comparative example, distance measurement is performed on the target objects S3 and S4 as in the example.

The graph of Fig. 12A is not so clear as to determine the presence of the two target objects.

In the graph of Fig. 12B, it is not possible to determine the presence of the two target objects and it is difficult to presume that the two target objects are present, compared with the case of Fig. 12A.

In the single diffusion, the distance measurement accuracy is higher in Fig. 11B than in Fig. 11A. In the quadruple diffusion, the distance measurement accuracy is higher in Fig. 12A than in Fig. 12B. That is, the distance measurement accuracy is lower in the quadruple diffusion than in the single diffusion.

Although not shown in the distance image 100 (see Fig. 6C), a high-reflectance object is present near the target object S3. Light reflected by the high-reflectance object may affect the distance image 100. More specifically, the light reflected by the high-reflectance object may be received at the portions of the distance image 100 corresponding to the target objects S3 and S4.

When the radiation angle is θ2, light is diffused and is radiated in a wider range than in the case where the radiation angle is θ1. In the comparative example, all the light sources 410 to 440 have the radiation angle θ2 and higher-intensity light is radiated in a wider range than in the case of the radiation angle θ1. Therefore, in the comparative example, high-intensity light is radiated also to a target object other than the target objects S3 and S4 and high-intensity reflected light is received by the light receiver 5 compared with the example. This effect causes the decrease in the distance measurement accuracy.

In this exemplary embodiment, the light source 440 out of the light sources 410 to 440 has the radiation angle θ2 and the non-irradiation region is eliminated, thereby improving the distance measurement accuracy. In the comparative example in which all the light sources 410 to 440 have the radiation angle θ2, the distance measurement accuracy decreases.

The number of light sources having the radiation angle θ2 may be smaller than the number of light sources having the radiation angle θ1.

The number of light sources having the radiation angle θ2 may be one (single diffusion). Even if the high-reflectance object is present near the target objects S3 and S4, the single diffusion may suppress the decrease in the distance measurement accuracy while reducing the effect of flare.

### (Modification)

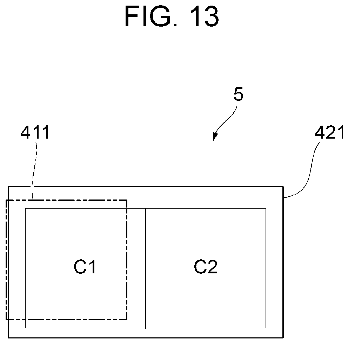

Fig. 13 illustrates a modification and corresponds to Fig. 10.

In the modification illustrated in Fig. 13, the light receiver 5 is divided into two light receiving sections C1 and C2. In this case, two light emitting sections and two irradiation sections are provided similarly to the light receiving sections. In the modification in Fig. 13, two light sources are provided. One light source has the radiation angle θ1, and the other light source has the radiation angle θ2. Light from the light source having the radiation angle θ1 is in the region 411 indicated by a two-dot chain line. Light from the light source having the radiation angle θ2 is in the region 421 indicated by a solid line.

The light from the light source having the radiation angle θ2 is radiated toward the light receiving section C1 and the entire light receiving section C2 adjacent to the light receiving section C1.

In the modification, two light sources emit light to expose the light receiving section C1, and the light source having the radiation angle θ2 emits light to expose the light receiving section C2.

### (Light Emitting Device 2 and Distance Measuring Device 1)

The light emitting device 2 indicated by the broken line in Fig. 1 includes the light emitter 4, the light emission driver 6, and the controller 8. The light emitting device 2 is an example of a light emitting device including a plurality of light sources each having a plurality of light emitting sections configured to emit light individually. The plurality of light sources is driven to light only first light emitting sections that radiate light toward one region. The plurality of light sources includes a partial light source having a radiation angle larger than a radiation angle of another light source.

The distance measuring device 1 illustrated in Fig. 1 is an example of a distance measuring device including: a light receiver 5 configured to receive reflected light originating from a light emitting device 2; an acquirer 5 configured to acquire a light reception result from the light receiver 5; and a controller 8 configured to measure a distance based on the light reception result acquired by the acquirer 5. The light receiver 5 is an example of the light receiver, and is an example of the acquirer. The CPU 81 of the controller 8 that implements the distance measuring function is an example of the distance measurer.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### <Appendix>

(((1))) A light emitting device comprising a plurality of light sources each having a plurality of light emitting sections configured to emit light individually, wherein:
   the plurality of light sources is driven to light only first light emitting sections that radiate the light toward one region, and
   the plurality of light sources includes a partial light source having a radiation angle larger than a radiation angle of another light source.
(((2))) The light emitting device according to (((1))), wherein:
   the first light emitting section of the partial light source is configured to radiate the light also toward a region adjacent to the one region, and
   a radiation range of the first light emitting section of the partial light source is wider than a radiation range of the first light emitting section of the other light source.
(((3))) The light emitting device according to (((2))), wherein the first light emitting section of the partial light source is configured to radiate the light toward the one region and the entire adjacent region.
(((4))) The light emitting device according to any one of (((1))) to (((3))), wherein a number of the partial light sources is smaller than a number of the other light sources.
(((5))) The light emitting device according to (((4))), wherein the number of the partial light sources is one.
(((6))) The light emitting device according to any one of (((1))) to (((5))), wherein the partial light source includes an optical member with which the radiation angle is larger than the radiation angle of the other light source.
(((7))) The light emitting device according to (((6))), wherein a number of the optical members is smaller than a number of the light emitting sections.
(((8))) A distance measuring device comprising:
   the light emitting device according to (((1)));
   a light receiver configured to receive reflected light originating from the light emitting device;
   an acquirer configured to acquire a light reception result from the light receiver; and
   a distance measurer configured to measure a distance based on the light reception result acquired by the acquirer.

According to (((1))), an effect of displacement of the light emitting sections on the one region may be reduced compared with a case where the plurality of light sources has the same radiation angle.

According to (((2))), the effect of displacement of the light emitting sections on the one region may be reduced compared with a case without the configuration in which the first light emitting section of the partial light source is configured to radiate the light also toward the region adjacent to the one region and the radiation range of the first light emitting section of the partial light source is wider than the radiation range of the first light emitting section of the other light source.

According to (((3))), the effect of displacement of the light emitting sections on the one region may be reduced compared with a case without the configuration in which the first light emitting section of the partial light source is configured to radiate the light toward the one region and the entire adjacent region.

According to (((4))), an effect of a high-reflectance object may be reduced compared with a case without the configuration in which the number of the partial light sources is smaller than the number of the other light sources.

According to (((5))), the effect of the high-reflectance object may be reduced compared with a case without the configuration in which the number of the partial light sources is one.

According to (((6))), costs may be reduced compared with a case without the configuration in which the partial light source includes the optical member with which the radiation angle is larger than the radiation angle of the other light source.

According to (((7))), costs may be reduced compared with a case without the configuration in which the number of the optical members is smaller than the number of the light emitting sections.

According to (((8))), the effect of displacement of the light emitting sections on the one region may be reduced compared with a case where the plurality of light sources has the same radiation angle.

## Claims

1. A light emitting device comprising a plurality of light sources each having a plurality of light emitting sections configured to emit light individually, wherein:
the plurality of light sources is driven to light only first light emitting sections that radiate the light toward one region, and
the plurality of light sources includes a partial light source having a radiation angle larger than a radiation angle of another light source.

2. The light emitting device according to claim 1, wherein:
the first light emitting section of the partial light source is configured to radiate the light also toward a region adjacent to the one region, and
a radiation range of the first light emitting section of the partial light source is wider than a radiation range of the first light emitting section of the other light source.

3. The light emitting device according to claim 2, wherein the first light emitting section of the partial light source is configured to radiate the light toward the one region and the entire adjacent region.

4. The light emitting device according to any one of claims 1 to 3, wherein a number of the partial light sources is smaller than a number of the other light sources.

5. The light emitting device according to claim 4, wherein the number of the partial light sources is one.

6. The light emitting device according to any one of claims 1 to 5, wherein the partial light source includes an optical member with which the radiation angle is larger than the radiation angle of the other light source.

7. The light emitting device according to claim 6, wherein a number of the optical members is smaller than a number of the light emitting sections.

8. A distance measuring device comprising:
the light emitting device according to claim 1;
a light receiver configured to receive reflected light originating from the light emitting device;
an acquirer configured to acquire a light reception result from the light receiver; and
a distance measurer configured to measure a distance based on the light reception result acquired by the acquirer.
